# FASCICULE DE BREVET EUROPEEN

(11) **EP 1 099 529 B1**
(45) Date de publication et mention de la délivrance du brevet: **17.12.2003**
(21) Numéro de dépôt: 00403129.0
(22) Date de dépôt: 10.11.2000
(51) Int. Cl.: B29C 49/20, B60K 15/04

(54) **Procédé pour réaliser une enveloppe soufflée munie d'une embouchure insérée**
Verfahren zur Herstellung von Behältern mit einem Behältermündungseinsatz durch Blasformen
Method to produce a blow moulded container with inserted mouth

(30) Priorité: 12.11.1999 FR 9914224
(43) Date de publication de la demande: 16.05.2001
(73) Titulaire: COMPAGNIE PLASTIC OMNIUM, 69007 Lyon (FR)
(72) Inventeur: Gombert, Patrice, 60200 Compiegne (FR); Marchal, Stéphanie, 60280 Margny les Compiegne (FR); Gris, Alain, 60320 Saint Sauveur (FR); Leviel, Claude, 60800 Duvy (FR); Griaud, Philippe, 60200 Compiegne (FR)
(74) Mandataire: Tanty, François

(56) Documents cités:
- DE-A- 4 205 332
- DE-A- 4 337 491
- JP-A- 6 047 801
- JP-A- 8 192 457
- US-A- 4 323 411

## Description

La présente invention concerne un procédé pour réaliser une enveloppe soufflée munie d'une embouchure et une enveloppe soufflée comportant un tel insert surmoulé.

La présente invention a trait plus particulièrement au domaine des réservoirs à carburant réalisés sous forme d'enveloppes soufflées en matière plastique.

On sait qu'un réservoir à carburant en matière plastique est muni d'une barrière aux hydrocarbures qui empêche ou limite les émissions d'hydrocarbures à travers sa paroi, sous forme par exemple de fuites ou par diffusion.

Des barrières connues sont obtenues par des procédés de fluoration ou encore sont constituées par une couche d'EVOH insérée entre deux couches de polyéthylène.

Les enveloppes ainsi constituées donnent généralement satisfaction au regard du critère d'émission des hydrocarbures.

Toutefois, en tant que telles, elles nécessitent quelques aménagements pour notamment pouvoir être raccordées à des conduits, par exemple pour l'acheminement du carburant liquide ou son refoulement, ainsi que pour assurer des recirculations de gaz dans le système à carburant.

Il est donc nécessaire de percer les enveloppes pour mettre des conduits en communication avec leur intérieur et de réaliser des assemblages, par vissage, soudage, clipage ou autre moyen pour assujettir lesdits conduits à la paroi de l'enveloppe.

Ces opérations de perçage et d'assemblage créent des passages dans la ou les barrières d'hydrocarbures et occasionnent des émissions d'hydrocarbrures.

Le brevet français FR 2 459 121 décrit un corps creux réalisé par soufflage, par exemple un réservoir de véhicule automobile, comportant un prisonnier métallique solidaire de la paroi du corps creux et présentant des perforations dans lesquelles pénètre lors du soufflage une matière monocouche formant le corps creux, le prisonnier étant destiné à coopérer avec un élément de bouchage.

Le prisonnier est ainsi retenu dans la paroi du corps creux avec une grande robustesse.

La demande de brevet allemand DE-A-42 05 332 décrit l'assemblage d'un élément de raccordement en métal à un réservoir à carburant réalisé par soufflage d'une matière monocouche, la paraison destinée à former le réservoir enrobant partiellement cet élément de raccordement.

Un tel assemblage permet de limiter dans une certaine mesure les émissions d'hydrocarbures

La présente invention vise à limiter de manière plus efficace les émissions d'hydrocarbures, voire à éliminer ces dernières.

Elle a tout d'abord pour objet un procédé pour réaliser, dans la paroi d'une enveloppe soufflée d'un réservoir à carburant, un passage apte à mettre en communication l'intérieur et l'extérieur de l'enveloppe et comportant une embouchure externe, ledit procédé comportant les étapes suivantes :
- surmouler un insert de forme tubulaire dans une paraison lors de son soufflage de manière à ce que la paraison enrobe l'un des bords de l'insert en laissant le bord opposé de l'insert faire saillie à l'extérieur de l'enveloppe pour constituer l'embouchure externe du passage, l'enveloppe issue de la paraison comportant au moins une première couche formant barrière aux hydrocarbures et une deuxième couche plus perméable aux hydrocarbures que la première, à l'extérieur de celle-ci,
- puis éliminer au moins une partie de la portion de paroi se trouvant dans l'insert, l'insert étant conformé pour créer un allongement du chemin de diffusion des hydrocarbures diffusant dans la deuxième couche depuis le bord de l'enveloppe adjacent à la portion de paroi éliminée vers l'extérieur de l'enveloppe et/ou une ou plusieurs régions d'épaisseur réduite dans cette deuxième couche sur le chemin de diffusion.

La solidarisation de l'enveloppe et de l'insert ayant lieu lors du soufflage de la paraison, elle s'opère sans interruption de la continuité de la paroi de l'enveloppe.

La deuxième couche plus perméable aux hydrocarbures forme un passage préférentiel pour ces derniers vers l'extérieur. Les réductions de l'épaisseur de cette deuxième couche sur le chemin de diffusion et/ou l'allongement de ce chemin constituent autant d'obstacles à la diffusion et permettent de limiter efficacement les émissions d'hydrocarbures.

La deuxième couche peut présenter une seule région d'épaisseur réduite, mais de préférence elle présente au moins deux régions d'épaisseur réduite et de préférence encore trois régions.

La première couche formant barrière peut se présenter sous la forme d'une couche-barrière en EVOH, et être disposée, par exemple, entre des couches interne et externe de l'enveloppe, cette barrière n'étant ni découpée ni transpercée au moment de la mise en place de l'insert.

Il en va de même pour toute autre barrière aux hydrocarbures, obtenue par exemple par fluoration ou par la technique dite coating.

La seule perturbation que subit la paroi de l'enveloppe est une déformation visant à lui faire épouser la forme du bord de l'insert qu'elle enrobe, déformation qui est favorable à l'établissement d'une barrière plus efficace aux hydrocarbures à la jonction entre l'enveloppe et l'insert du fait que la couche formant barrière, étirée par la déformation, vient s'appliquer plus intimement contre ou au voisinage très proche de l'insert, réduisant ainsi l'espace disponible entre l'insert et ladite barrière pour le passage des hydrocarbures.

L'enveloppe peut comporter au moins une couche en polyéthylène.

Dans un mode de mise en oeuvre particulier de l'invention, on utilise un insert réalisé en une matière peu perméable aux hydrocarbures, matière que l'on désignera dans la suite de la description par le terme « matière à basse perméabilité ».

Encore dans un mode de mise en oeuvre particulier de l'invention, on interpose un adhésif entre le bord de l'insert enrobé par la paraison et ladite paraison, de façon à améliorer le contact entre le bord de l'insert enrobé par la paroi et cette dernière, en assurant une adhésion.

L'adhésif peut être déposé sur une surface localisée de la paraison avant surmoulage de l'insert ou sur au moins une partie du bord de l'insert lui-même.

Dans un mode de mise en oeuvre particulier de l'invention, on prévoit, sur le bord de l'insert enrobé par la paraison, une ou plusieurs rainures périphériques dans lesquelles pénètre la paraison au moment du surmoulage lors du soufflage. Ces rainures assurent notamment l'accrochage mécanique de l'insert sur la paroi de l'enveloppe.

La ou les rainures périphériques peuvent définir une gorge interne débouchant dans l'espace intérieur de l'insert.

Dans une variante particulière de ce mode de mise en oeuvre, les rainures périphériques sont une première gorge externe dont l'ouverture est dirigée vers l'extérieur de l'insert, une deuxième gorge externe dont l'ouverture est dirigée dans l'axe de l'insert vers l'extérieur de l'enveloppe et une troisième gorge interne dont l'ouverture est dirigée dans l'axe de l'insert vers l'extérieur de l'enveloppe.

Toutes ces gorges remplissent deux fonctions, à savoir d'une part l'accrochage mécanique de la paroi de l'enveloppe sur l'insert et d'autre part la déformation de l'enveloppe visant à constituer des chicanes sur le passage éventuel des hydrocarbures qui contourneraient l'insert pour s'échapper de l'enveloppe.

L'insert peut être conformé de manière à ce que l'enveloppe présente un coin rentrant situé dans l'espace intérieur de l'insert.

L'embouchure externe formée par l'insert peut être apte à recevoir une conduite que l'on peut fixer sur l'embouchure par soudage par exemple.

On choisira la matière de l'insert de préférence compatible avec celle constituant la conduite, de manière que cette dernière puisse se souder à l'insert en réalisant une jonction continue éliminant tout risque d'émission des hydrocarbures.

L'insert peut, en variante, comporter un filetage destiné à la fixation d'un élément rapporté tel qu'un couvercle, que l'on peut mettre en place par vissage sur l'embouchure.

La présente invention a encore pour objet une enveloppe d'un réservoir à carburant comportant un insert tubulaire destiné à constituer une embouchure externe apte à mettre en communication l'intérieur et l'extérieur de l'enveloppe, caractérisée par le fait que l'enveloppe comporte au moins une première couche formant barrière aux hydrocarbures et une deuxième couche plus perméable aux hydrocarbures que la première, à l'extérieur de la première couche, et par le fait que l'insert est conformé pour créer un allongement du chemin de diffusion des hydrocarbures diffusant dans la deuxième couche depuis le bord de l'enveloppe adjacent à l'insert vers l'extérieur de l'enveloppe et/ou des réductions de l'épaisseur de cette deuxième couche sur le chemin de diffusion.

Dans le but de mieux faire comprendre l'invention, on va en décrire maintenant des modes de réalisation donnés à titre d'exemples non limitatifs, en référence au dessin annexé, dans lequel :
- la figure 1 est une vue en élévation avec arraché partiel d'un réservoir à carburant conforme à l'invention,
- la figure 2 est une vue rapprochée et en coupe de l'embouchure du réservoir munie d'une tubulure,
- la figure 3 est une vue en coupe d'un insert utilisé pour réaliser l'enveloppe des figures 1 et 2,
- la figure 4 est une vue en élévation de l'insert de la figure 3, et
- la figure 5 est une vue schématique et partielle, en coupe, du réservoir selon une variante de réalisation de l'invention.

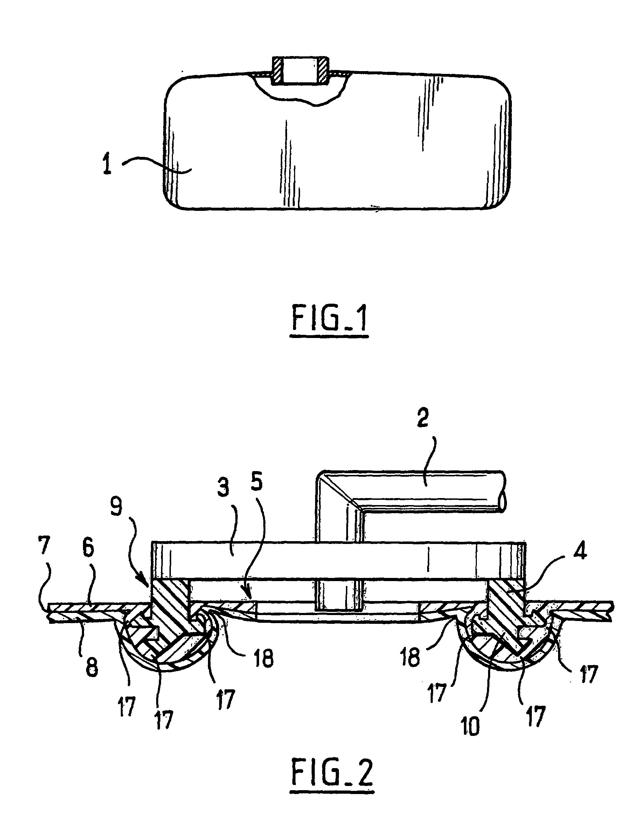

L'enveloppe 1 représentée à la figure 1 est un réservoir à carburant qui peut prendre différentes formes, dont celle d'un parallélépipède, comme représenté ici.

L'enveloppe 1 comporte différents raccordements avec des tubulures servant au remplissage du réservoir, au départ de carburant vers le moteur, au retour de carburant, au dégazage et autres fonctions spécifiques liées au réservoir.

Dans l'exemple représenté, ne figure qu'une seule tubulure 2, visible à la figure 2, qui est soudée par intermédiaire de son disque support 3 à l'embouchure 4 d'un passage 5 mettant l'intérieur de l'enveloppe en communication avec l'extérieur de l'enveloppe.

La tubulure 2, comme son disque support, est réalisée en un matériau à basse perméabilité qui constitue une barrière efficace aux hydrocarbures.

La paroi de l'enveloppe est réalisée en sandwich. Elle comporte, de l'extérieur vers l'intérieur, une couche externe de polyéthylène 6, une couche intermédiaire très faiblement perméable aux hydrocarbures en EVOH 7 et une couche interne de polyéthylène 8.

Entre chaque couche de polyéthylène 6, 8 et la couche-barrière 7, est intercalée une couche d'adhésif (non représentée), assurant l'adhésion entre le polyéthylène et l'EVOH.

La couche d'EVOH 7 est emprisonnée entre les deux couches de polyéthylène 6 et 8 lors de la formation de la paraison qui est destinée, par soufflage, à devenir l'enveloppe de la figure 1.

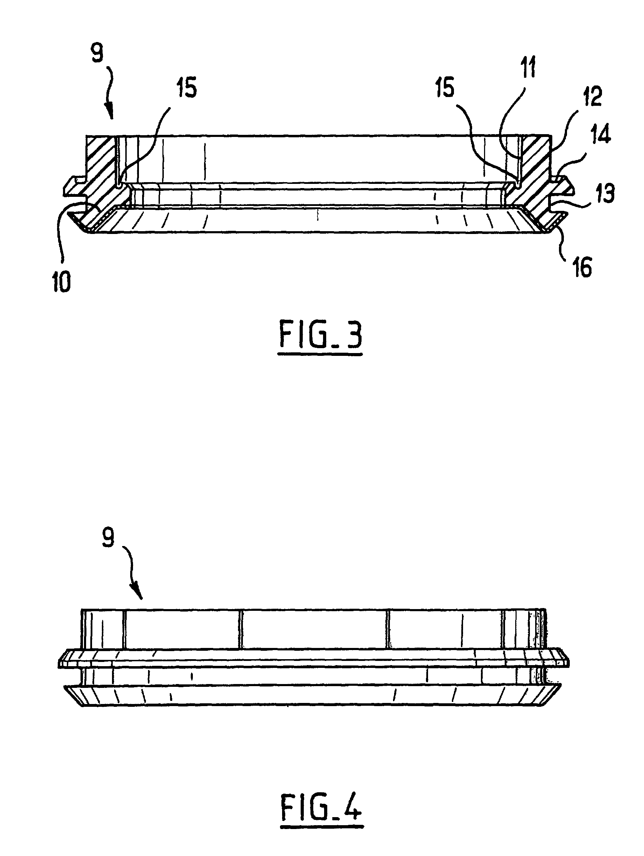

Pour obtenir le passage représenté aux figures 1 et 2, on place dans le moule de soufflage (non représenté) l'insert 9 représenté aux figures 3 et 4.

Cet insert 9 se présente sous la forme d'une portion de tube continue angulairement munie, au voisinage de l'un de ses bords 10, d'excroissances annulaires formées sur ses parois interne 11 et externe 12.

Lesdites excroissances sont conformées de manière à constituer :
- une première gorge annulaire externe 13 dont l'ouverture est dirigée vers l'extérieur de l'insert,
- une deuxième gorge annulaire externe 14 dont l'ouverture est dirigée dans l'axe de l'insert vers l'extérieur de l'enveloppe, et
- une troisième gorge annulaire interne 15 dont l'ouverture est dirigée dans l'axe de l'insert vers l'extérieur de l'enveloppe.

Il est précisé que l'on entend par forme tubulaire, dans la présente invention, notamment une forme apte à conduire un fluide circulant sensiblement suivant son axe.

Ainsi, l'insert de forme tubulaire peut présenter non seulement une section de passage circulaire comme dans l'exemple décrit, mais également toute autre section, par exemple elliptique, carrée, rectangulaire, etc.

L'insert 9 étant placé dans le moule de soufflage avec son bord 10 dirigé vers l'intérieur du moule, la paraison vient s'y appliquer et se déforme en enrobant ledit bord 10 sur ses faces interne 11 et externe 12, recouvrant ainsi les gorges annulaires 13, 14 et 15.

La paraison déformée prend la configuration représentée à la figure 2, où l'on voit que la couche externe 6 de polyéthylène vient remplir les gorges 13, 14,15 formées sur l'insert et que la couche-barrière 7 s'étire pour contourner le bord de l'insert en se rapprochant localement de ses excroissances.

La couche-barrière 7 demeure néanmoins emprisonnée entre les deux couches de polyéthylène.

On remarquera que la portion de l'enveloppe située dans l'espace intérieur de l'insert présente un coin rentrant 18, dû à la pénétration de la paraison dans la gorge 15.

Grâce à ses gorges 13, 14, 15, l'insert est solidement ancré dans la couche externe 6 de polyéthylène, ce qui assure sa solidarisation avec l'enveloppe.

Comme on le voit à la figure 3, une couche d'adhésif 16 recouvre la face du bord de l'insert dirigée vers la paraison, ce qui assure l'adhésion de cette dernière sur l'insert et vient compléter l'effet mécanique produit par les excroissances de l'insert.

On réalise ensuite une ouverture dans la partie de l'enveloppe se trouvant à l'intérieur de l'insert, par simple découpage.

Le bord de l'insert dirigé vers l'extérieur du moule au moment du soufflage reste à l'extérieur de l'enveloppe et est disponible pour recevoir le disque support 3 de la tubulure 2.

L'insert 9 étant réalisé en un matériau basse perméabilité qui est identique ou compatible avec celui du disque, le soudage du disque sur l'insert ne pose aucune difficulté.

On voit que l'invention procure une enveloppe munie d'un passage entre son intérieur et l'extérieur, sans altération de la paroi de l'enveloppe.

Ce passage comporte une embouchure constituée par le bord de l'insert situé à l'extérieur de l'enveloppe, apte à être soudé à la tubulure ou à son disque support pour assurer la continuité de la barrière anti-émissions.

Le seul parcours possible des hydrocarbures entre l'intérieur et l'extérieur de l'enveloppe 1 est la couche externe 6 de polyéthylène enrobant l'insert 9.

Ce parcours est long et sinueux. Il comporte des étranglements 17, au nombre de trois dans l'exemple décrit, dus au fait que la couche-barrière est localement rapprochée des excroissances de l'insert, ce qui limite considérablement les fuites d'hydrocarbures vers l'extérieur.

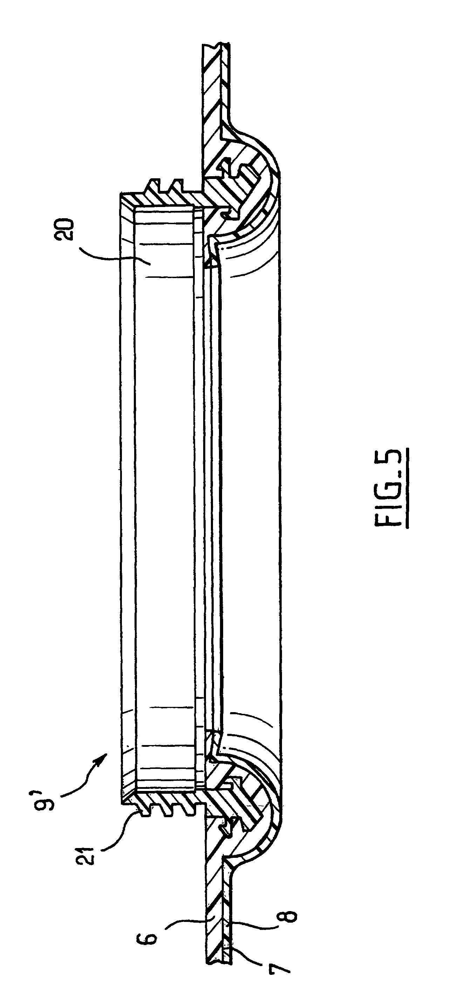

On a représenté partiellement sur la figure 5 un réservoir analogue à celui décrit précédemment et ne se différenciant de ce dernier que par la forme de l'insert 9'.

Ce dernier comporte outre des gorges 13 à 15 analogues à celles de l'insert 9, un col annulaire 20 s'étendant à l'extérieur du réservoir.

Ce col 20 comporte un filetage 21 sur sa paroi extérieure permettant, dans l'exemple décrit, de visser un couvercle, non représenté sur la figure 5.

Le couvercle est dévissé pour purger le réservoir.

## Revendications

1. Procédé pour réaliser une enveloppe soufflée (1) d'un réservoir à carburant munie d'un passage (5) mettant en communication l'intérieur et l'extérieur de l'enveloppe et comportant une embouchure externe (4), ledit procédé comportant les étapes suivantes :
- surmouler un insert (9 ; 9') de forme tubulaire dans une paraison lors de son soufflage de manière que la paraison enrobe l'un des bords (10) de l'insert en laissant le bord opposé de l'insert faire saillie à l'extérieur de l'enveloppe pour constituer l'embouchure externe (4) du passage, l'enveloppe issue de la paraison comportant au moins une première couche formant barrière aux hydrocarbures (7) et une deuxième couche (6) plus perméable aux hydrocarbures que la première, à l'extérieur de celle-ci,
- puis éliminer au moins une partie de la portion de paroi, l'insert étant conformé pour créer un allongement du chemin de diffusion des hydrocarbures diffusant dans la deuxième couche depuis le bord de l'enveloppe adjacent à la portion de la paroi éliminée vers l'extérieur de l'enveloppe et/ou une ou plusieurs régions d'épaisseur réduite dans cette deuxième couche sur le chemin de diffusion, **caractérisé par le fait que** la portion de paroi qui est éliminée se trouve dans l'insert.

2. Procédé selon la revendication précédente, où la deuxième couche présente au moins deux régions d'épaisseur réduite.

3. Procédé selon l'une des deux revendications précédentes, où la couche formant barrière est constituée par une couche en EVOH.

4. Procédé selon l'une quelconque des revendications précédentes, où la première couche formant barrière (7) est disposée entre une couche interne (8) et une couche externe (6) de l'enveloppe.

5. Procédé selon l'une quelconque des revendications précédentes, où l'enveloppe comporte au moins une couche de polyéthylène (6 ; 8).

6. Procédé selon l'une quelconque des revendications précédentes, l'on utilise un insert (9 ; 9') réalisé en une matière peu perméable aux hydrocarbures.

7. Procédé selon l'une quelconque des revendications précédentes, où l'on interpose un adhésif (16) entre le bord de l'insert enrobé par la paraison et ladite paraison.

8. Procédé selon la revendication 7, où l'adhésif (16) est déposé sur au moins une partie du bord de l'insert, avant surmoulage.

9. Procédé selon la revendication 7, où l'adhésif (16) est déposé sur une surface localisée de la paraison, avant surmoulage.

10. Procédé selon l'une quelconque des revendications précédentes, où l'on prévoit, sur le bord (10) de l'insert enrobé par la paraison, une ou plusieurs rainures périphériques dans lesquelles pénètre la paraison au moment du surmoulage lors du soufflage.

11. Procédé selon la revendication précédente, où la ou les rainures périphériques définissent une gorge interne (15) débouchant dans l'espace intérieur de l'insert.

12. Procédé selon l'une des revendications 10 et 11, où les rainures périphériques sont une première gorge externe (13) dont l'ouverture est dirigée vers l'extérieur de l'insert, une deuxième gorge externe (14) dont l'ouverture est dirigée dans l'axe de l'insert vers l'extérieur de l'enveloppe et une troisième gorge interne (15) dont l'ouverture est dirigée dans l'axe de l'insert vers l'extérieur de l'enveloppe.

13. Procédé selon l'une quelconque des revendications précédentes, où l'insert est conformé de manière à ce que l'enveloppe présente un coin rentrant (18) situé dans l'espace intérieur de l'insert.

14. Procédé selon l'une quelconque des revendications précédentes, où l'embouchure externe formée par l'insert (9) est apte à recevoir une conduite (2).

15. Procédé selon l'une quelconque des revendications 1 à 13, où l'insert (9') comporte un filetage (21) destiné à la fixation d'un élément rapporté tel qu'un couvercle.

16. Enveloppe d'un réservoir à carburant comportant un insert tubulaire (9 ; 9') destiné à constituer une embouchure externe apte à mettre en communication l'intérieur et l'extérieur de l'enveloppe où l'enveloppe comporte au moins une première couche formant barrière aux hydrocarbures et une deuxième couche plus perméable aux hydrocarbures que la première, à l'extérieur de la première couche, et où l'insert est conformé pour créer un allongement du chemin de diffusion des hydrocarbures diffusant dans la deuxième couche depuis le bord de l'enveloppe adjacent à une portion de la paroi éliminée vers l'extérieur de l'enveloppe, et/ou des réductions de l'épaisseur de cette deuxième couche sur le chemin de diffusion, **caractérisée par le fait que** la portion de la paroi éliminée se trouve dans l'insert.

## Patentansprüche

1. Verfahren zur Herstellung eines geblasenen Hohlkörpers (1) in Form eines Kraftstoffbehälters, der mit einem Kanal (5) versehen ist, der eine Verbindung vom Innenraum des Hohlkörpers nach außen schafft und eine äußere Mündung (4) aufweist, wobei das Verfahren die folgenden Verfahrensschritte umfasst:
- beim Blasformen wird in einem Schlauch ein rohrförmiges Einlegeteil (9; 9') abgeformt, so dass der Schlauch einen der Ränder (10) des Einlegeteils umhüllt, während der gegenüberliegende Rand des Einlegeteils zur Bildung der äußeren Mündung (4) aus dem Hohlkörper herausragt, wobei der aus dem Schlauch entstandene Hohlkörper mindestens eine erste innere Kohlenwasserstoff-Sperrschicht (7) und eine zweite äußere Schicht (6), die durchlässiger für Kohlenwasserstoff ist als die erste Schicht, aufweist,
- dann wird mindestens ein Teil des Wandabschnitts entfernt, wobei das Einlegeteil derart ausgebildet ist, dass es den Diffusionsweg der in die zweite Schicht diffundierenden Kohlenwasserstoffe vom an den entfernten Wandabschnitt angrenzenden Rand des Hohlkörpers nach Außen hin verlängert und/oder dass es auf dem Diffusionsweg in dieser zweiten Schicht ein oder mehrere Bereiche mit einer geringeren Dicke bildet,
**dadurch gekennzeichnet, dass** der Wandabschnitt, der entfernt wird, sich im Einlegeteil befindet.

2. Verfahren nach dem vorangegangenen Anspruch, wobei die zweite Schicht mindestens zwei Bereiche mit einer geringeren Dicke aufweist.

3. Verfahren nach einem der beiden vorangegangenen Ansprüche, wobei die Sperrschicht aus einer EVOH-Schicht besteht.

4. Verfahren nach einem beliebigen der vorangegangenen Ansprüche, wobei die erste, die Sperrschicht (7) bildende Schicht zwischen einer Innenschicht (8) und einer Außenschicht (6) des Hohlkörpers angeordnet ist.

5. Verfahren nach einem beliebigen der vorangegangenen Ansprüche, wobei der Hohlkörper mindestens eine Polyethylenschicht (6; 8) aufweist.

6. Verfahren nach einem der vorangegangenen Ansprüche, wobei ein Einlegeteil (9; 9') verwendet wird, das aus einem für Kohlenwasserstoffe wenig durchlässigen Material besteht.

7. Verfahren nach einem der vorangegangenen Ansprüche, wobei zwischen dem vom Schlauch umhüllten Rand des Einlegeteils und dem Schlauch selbst ein Klebstoff (16) eingebracht wird.

8. Verfahren nach Anspruch 7, wobei der Klebstoff (16) vor dem Formen auf mindestens einen Teil des Randes des Einlegeteils aufgebracht wird.

9. Verfahren nach Anspruch 7, wobei der Klebstoff (16) vor dem Formen auf eine bestimmte Fläche des Schlauchs aufgebracht wird.

10. Verfahren nach einem beliebigen der vorangegangenen Ansprüche, wobei auf dem vom Schlauch umhüllten Rand (10) des Einlegeteils eine oder mehrere umlaufende Nuten vorgesehen sind, in die der Schlauch beim Blasformen eindringt.

11. Verfahren nach dem vorangegangenen Anspruch, wobei die umlaufende Nut, bzw. die umlaufenden Nuten, eine Innenrille (15) definieren, die in den Innenraum des Einlegeteils mündet.

12. Verfahren nach einem der Ansprüche 10 und 11, wobei die umlaufenden Nuten eine erste Außenrille ( 13) mit einer zur Außenseite des Einlegeteils hin gerichteten Öffnung, eine zweite Außenrille (14) mit einer in der Achse des Einlegeteils zur Außenseite des Hohlkörpers hin gerichteten Öffnung und eine dritte Innenrille ( 15) mit einer in der Achse des Einlegeteils zur Außenseite des Hohlkörpers hin gerichteten Öffnung sind.

13. Verfahren nach einem beliebigen der vorangegangenen Ansprüche, wobei das Einlegeteil derart ausgebildet ist, dass der Hohlkörper eine einspringende Ecke (18) aufweist, die im Innenraum des Einlegeteils angeordnet ist.

14. Verfahren nach einem beliebigen der vorangegangenen Ansprüche, wobei eine Leitung (2) durch die durch das Einlegeteil (9) gebildete äußere Mündung aufnehmbar ist.

15. Verfahren nach einem beliebigen der Ansprüche 1 bis 13, wobei das Einlegeteil (9') ein Gewinde (21) zur Befestigung eines angesetzten Elements, eines Deckels zum Beispiel, aufweist.

16. Hohlkörper in Form eines Kraftstoffbehälters der ein rohrförmiges Einlegeteil (9; 9') aufweist, das zur Bildung einer äußeren Mündung geeignet ist, die zur Verbindung des Innenraums des Hohlkörpers nach außen vorgesehen ist, wobei der Hohlkörper mindestens eine erste innere Schicht, die eine Kohlenwasserstoff-Sperrschicht bildet und eine zweite äußere Schicht, die durchlässiger für Kohlenwasserstoff ist als die erste Schicht, aufweist, und wobei das Einlegeteil derart ausgebildet ist, dass es den Diffusionsweg der in die zweite Schicht diffundierenden Kohlenwasserstoffe vom an den entfernten Wandabschnitt angrenzenden Rand des Hohlkörpers nach außen hin verlängert und/oder die Dicke dieser zweiten Schicht auf dem Diffusionsweg verringert ist, **dadurch gekennzeichnet, dass** der Wandabschnitt, der entfernt wird, sich im Einlegeteil befindet.

## Claims

1. Process for producing a blow-moulded envelope (1) for a fuel tank, provided with a passage (5) that brings the inside and the outside of the envelope into communication and has an external mouthpiece (4), the said process comprising the following steps:
- overmoulding an insert (9; 9') of tubular shape in a parison while it is being blow moulded so that the parison encapsulates one of the edges (10) of the insert while allowing the opposite edge of the insert to project to the outside of the envelope in order to constitute the external mouthpiece (4) of the passage, the envelope arising from the parison having at least a first hydrocarbon barrier layer (7) and a second layer (6) more permeable to hydrocarbons than the first, on the outside of the latter;
- then removing at least part of the wall portion, the insert being shaped so as to create an extension of the path for diffusion of the hydrocarbons diffusing into the second layer from the envelope edge adjacent to the removed portion of the wall towards the outside of the envelope and/or one or more regions of smaller thickness in this second layer along the diffusion path,
**characterized in that** the wall portion that is removed lies in the insert.

2. Process according to the preceding claim, in which the second layer has at least two regions of reduced thickness.

3. Process according to either of the preceding claims, in which the barrier layer is formed by an EVOH layer.

4. Process according to any one of the preceding claims, in which the first barrier layer (7) is placed between an internal layer (8) and an outer layer (6) of the envelope.

5. Process according to any one of the preceding claims, in which the envelope has at least one polyethylene layer (6; 8).

6. Process according to any one of the preceding claims, in which an insert (9; 9') made of a material barely permeable to hydrocarbons is used.

7. Process according to any one of the preceding claims, in which an adhesive (16) is interposed between the edge of the insert encapsulated by the parison and the said parison.

8. Process according to Claim 7, in which the adhesive (16) is placed on at least part of the edge of the insert, before overmoulding.

9. Process according to Claim 7, in which the adhesive (16) is placed on a localized surface of the parison, before overmoulding.

10. Process according to any one of the preceding claims, in which one or more peripheral grooves are provided on the edge (10) of the insert encapsulated by the parison, the parison penetrating the said peripheral grooves at the moment of overmoulding during blowing.

11. Process according to the preceding claim, in which the peripheral grooves define an internal slot (15) that opens into the inner space of the insert.

12. Process according to either of Claims 10 and 11, in which the peripheral grooves are a first external slot (13), the opening of which is directed towards the outside of the insert, a second external slot (14), the opening of which is directed along the axis of the insert towards the outside of the envelope, and a third, internal slot (15), the opening of which is directed along the axis of the insert towards the outside of the envelope.

13. Process according to any one of the preceding claims, in which the insert is shaped so that the envelope has a reentrant corner (18) located in the inner space of the insert.

14. Process according to any one of the preceding claims, in which the external mouthpiece formed by the insert (9) is capable of receiving a pipe (2).

15. Process according to any one of Claims 1 to 13, in which the insert (9') has a screw thread (21) for fastening an attached element, such as a lid.

16. Envelope for a fuel tank, having a tubular insert (9; 9') intended to form an external mouthpiece capable of bringing the inside and the outside of the envelope into communication, in which the envelope has at least a first hydrocarbon barrier layer and a second layer more permeable to hydrocarbons than the first, outside the first layer, and in that the insert is shaped so as to create an extension of the diffusion path for the hydrocarbons diffusing into the second layer from the envelope edge adjacent to a removed portion of the wall towards the outside of the envelope, and/or reductions in the thickness of this second layer along the diffusion path, **characterized in that** the removed portion of the wall lies in the insert.
